# EUROPÄISCHE PATENTSCHRIFT

(11) **EP 2 194 307 B1**
(45) Veröffentlichungstag und Bekanntmachung des Hinweises auf die Patenterteilung: **10.10.2012**
(21) Anmeldenummer: 09174830.1
(22) Anmeldetag: 03.11.2009
(51) Int. Cl.: F16L 23/024, F16L 41/08

(54) **Anschlussvorrichtung zur Befestigung und zum dichten Verbinden einer Fluidleitung mit einem anderen fluidführenden Bauteil**
Coupling for fixing a fluid conducting pipe and with a fluid conducting part in a sealed manner
Connexion étanche entre un tuyau et une autre pièce dans laquelle circule un fluide

(30) Priorität: 02.12.2008 DE 102008055470
(43) Veröffentlichungstag der Anmeldung: 09.06.2010
(73) Patentinhaber: ContiTech Techno-Chemie GmbH, 61184 Karben (DE)
(72) Erfinder: Krumpholz, Marc, 61184 Karben (DE)
(74) Vertreter: Finger, Karsten

(56) Entgegenhaltungen:
- US-A- 4 762 343
- US-A- 5 464 256
- US-A1- 2003 197 375
- US-A1- 2005 029 806
- US-B1- 6 318 765
- ANONYMOUS: "Method for mechanical pipe to fitting attachment incorporating and anti-rotation feature in a machined block" RESEARCH DISCLOSURE, MASON PUBLICATIONS, HAMPSHIRE, GB, Bd. 474, Nr. 27, 1. Oktober 2003 (2003-10-01), XP007132907 ISSN: 0374-4353

## Beschreibung

Die Erfindung betrifft eine Anschlussvorrichtung zum Verbinden eines Endes einer Fluidleitung mit einem eine Durchflussbohrung aufweisenden, mit Fluid zu versorgendem Bauteil gemäß dem Oberbegriff des Anspruchs 1.

Fluidleitungen für Fahrzeuge weisen Schläuche, Schlauch- und Rohrleitungen sowie Schraub- und Steckverbindungen auf. Sie fördern die Medien Luft, Öl, Kraftstoff und Wasser. Die Rohrleitungen der Fluidleitungen bestehen aus Stahl, Aluminium oder festem Kunststoff.

Beispielsweise werden Fluidleitungen für Kraftstoffsysteme vom Tank bis zum Motor eingesetzt. Dabei ist die anwendungsgerechte Einbindung von Schläuchen, Rohren und Armaturen die Basis für funktionssichere Fluidleitungen, die absolut dichte Verbindungen zu allen Anschlussaggregaten herstellen müssen.

Fluidleitungen werden als komplexe Module hergestellt, die für den sicheren Anschluss an Aggregate und Bauteile vorbereitet sind.

Aufgrund der kompakten Bauräume in den Motorräumen der Fahrzeuge sind die Fluidleitungen abhängig von dem zur Verfügung stehenden Bauraum konfiguriert und gebogen. Die Fluidleitungen weisen an ihren Enden Steckverbindungen, Verschraubungen oder andere Befestigungselemente auf. Dadurch wird die Montage der Fluidleitungen beim Automobilhersteller ermöglicht. Die Anschlüsse sollen einfach montierbar sein, wobei die dichte Verbindung zu den unterschiedlichsten Fahrzeugaggregateu nicht leiden darf.

Aus der DE 692 15 779 T2 (EP 0 523 970 B1) ist eine Anschlussvorrichtung für das Ende einer Rohrleitung bekannt, die eine Klemmplatte mit zwei achsparallelen, unterschiedlich großen Bohrengen aufweist. Die kleinere Bohrung liegt in einem Befestigungsbereich und die größere Bohrung in einem Rohraufnahmebereich der Klemmplatte. Über die kleinere Bohrung kann die Klemmplatte mittels eines Schraubbolzens, der in eine Gewindebohrung des Gehäuses des zu verbindenden Bauteils greift, an diesem befestigt werden. Diese Gewindebohreng liegt parallel zu einem Fluidkanal des Gehäuses, in den das Ende der Rohrleitung eingesteckt ist. Die Einstecktiefe ist durch einen radialen, nach außen gerichteten Ringflansch im Endbereich der Rohrleitung begrenzt. Dieser Ringflansch ist im Durchmesser größer als die größere, die Rohrleitung aufnehmende Bohrung des Rohraufnahmebereiches der Klemmplatte. Durch die Befestigung der Klemmplatte über den Schraubbolzen am Gehäuse drückt die Klemmplatte mit dem Rohraufnahmebereich auf den Ringflansch des Rohrendes, das dadurch mit dem Ringflansch dichtend auf die Wand des Gehäuses gedrückt wird.

Die Montage dieser Anschlussvorrichtung ist umständlich und zeitaufwendig. Die Klemmplatte muss auf die Rohrleitung geschoben werden. Der Monteur muss nun die Klemmplatte zur Gewindebohrung ausrichten und dann den Schraubbolzen durch die kleinere Bohrung im Befestigungsbereich stecken und in das Gehäuse eindrehen.

Die US 5,464,256 betrifft eine Verbindungsvorrichtung mit einer Platte und einem Endstück einer Schlauchleitung, um das Endstück mit einem Fluidkreislauf zu koppeln. Die Platte weist Nuten auf, in die die korrespondierenden Rippen des Endstückes in axialer Richtung eingeführt werden können, um so die radiale Verdrehung von Platte und Endstück gegeneinander zu verhindern.

Der Erfindung liegt die Aufgabe zugrunde, eine Anschlussvorrichtung der eingangs geschilderten Art zu schaffen, die sich bei einfacherer Montage durch einen sicheren Sitz des eingesteckten Endes der Rohrleitung auszeichnet.

Die Aufgabe wird erfindungsgemäß dadurch gelöst, dass die Vorrichtung einen mit dem Ende der Fluidleitung verbundenen Anschlussstutzen aufweist, der in die Gehäusebohrung einsteckbar ist und dass die Halteplatte auf dem Anschlussstutzen formschlüssig gegen Drehung and Axialverschiebung gesichert aufsteckbar ist. Die formschlüssige Verbindung von Anschlussstutzen und Halteplatte hält beide Teile relativ zueinander in gesicherter Rotations- und Axiallage.

Gemäß der Erfindung wird die Halteplatte auf den Anschlussstutzen unter Formschluss aufgesetzt. Die Halteplatte wird auf den Anschlussstutzen vorzugsweise aufgeklipst und ist in dieser Lage vor Verdrehen und axialem Verschieben gegenüber dem Anschlussstutzen gesichert. Die Montage der Fluidleitung kann somit einfach und positionssicher durchgeführt werden. Der Anschlussstutzen wird in die Gehäusebohrung eingeführt, bis die auf ihm festsitzende Halteplatte im Befestigungsbereich gegen das Gehäuse anliegt. Der Monteur muss nur noch den Schraubbolzen durchstecken. Die Halteplatte braucht nicht separat zur Rohrleitung ausgerichtet zu werden

Durch das Anziehen des Schraubbolzens wird die Halteplatte gegen das Gehäuse gepresst und hält dadurch auch den Anschlussstutzen in seiner eingesteckten Lage. Die Halteplatte, die auch aus Kunststoff hergestellt sein kann, dient zum Fixieren der Fluidleitung, so dass der Anschlussstutzen nicht aus der Durchflussbohrung herausrutschen kann.

In vorteilhafter Ausgestaltung der Erfindung weist die Halteplatte im Scheitelpunkt der ersten Bohrung eine hervorragende Rastnase auf, die in eine axiale Scheitelnut im Anschlussstutzen eingreift und in einen Verriegelungsabsatz im Nutgrund eingreift.

Die Halteplatte hat im Rohraufnahmebereich eine Rastnase und einen im Scheitelpunkt des Rohrlochs nach innen ragenden Steg, die beide in entsprechende Ausnehmungen des Anschlussstutzens eingreifen. Dadurch werden ein Verdrehen und ein axiales Verschieben verhindert.

In weiterer Ausgestaltung der Erfindung weist die Halteplatte im Befestigungsbereich eine größere Dicke auf als im Bereich der Rohr- bzw. Anschlussstutzenaufnahme.

Anhand der Zeichnung wird nachstehend ein Ausführungsbeispiel der Erfindung näher erläutert. Es zeigt
- Fig. 1: die Anschlussvorrichtung im Längsschnitt mit einer an einem Gehäuse befestigten Halteplatte zum Befestigen und Verbinden des Endes einer Fluidleitung;
- Fig. 2: die Halteplatte und den Anschlussstutzen des Rohrleitungsendes in geschnittener Detaildarstellung im unverriegelten Zustand zueinander;
- Fig. 3: Halteplatte und Anschlussstutzen in perspektivischer Ansicht vor dem Ineinanderstecken;
- Fig. 4: Halteplatte und Anschlussstutzen im miteinander verriegelten Zustand;
- Fig. 5: die verriegelten Bauteile in perspektivischer Ansicht;
- Fig. 6: eine Detaildarstellung aus Fig. 2;
- Fig. 7: eine Detaildarstellung aus Fig. 4.
- Fig. 8: eine Rückansicht der Halteplatte.

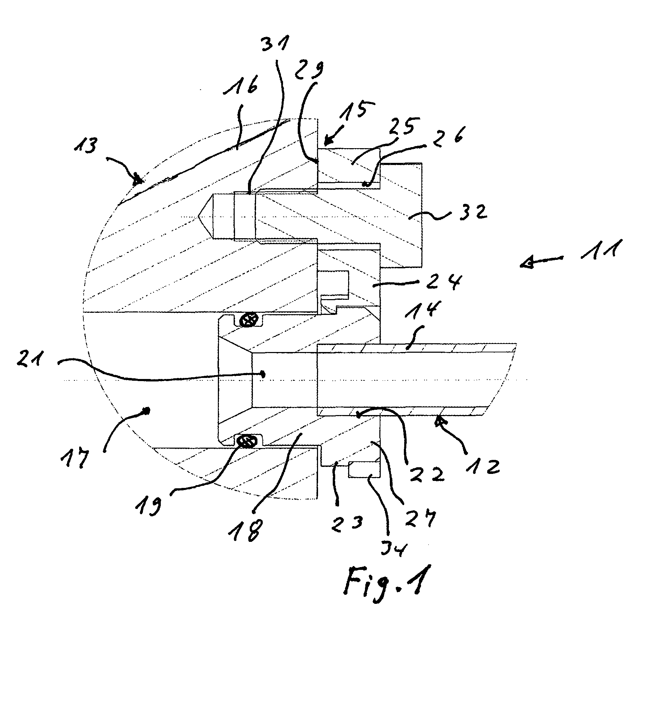

Die in Fig. 1 gezeigte Anschlussvorrichtung 11 dient zum Anschließen einer Rohrleitung 12, die Bestandteil einer komplexen Fluidleitung ist, an ein anderes Bauteil bzw. Aggregat 13, das eine fluidtechnische Einrichtung, wie z.B. ein ölgeschmiertes Lagergehäuse für einen Turbolader im Kraftfahrzeug, sein kann. Zu der Anschlussvorrichtung 11 gehört ein Rohrleitungsende 14 der Fluidleitung und ein Anschlussbereich 15 des Bauteils 13.

Das Gehäuse 16 des Aggregates 13 weist eine Durchflussbohrung 17 auf. In diese Durchflussbohrung 17 ist ein metallischer, hohlzylindrischer Anschlussstutzen 18 über eine Teillänge eingesteckt, wobei der Umfang des Anschlussstutzens 18 über einen O-förmigen Dichtungsring 19 gegenüber der Durchflussbohrung 17 abgedichtet ist.

Die Durchgangsbohrung 21 des Anschlussstutzens 18 ist stufenförmig ausgebildet. In der nach außen gerichteten, mit größerem Innendurchmesser versehenen Stufe 22 ist das Rohrleitungsende 14 stirnseitig eingelötet. Das Rohrleitungsende 14 mit dem Anschlussstutzen 18 ist Teil der Rohrleitung 12, die ein Bestandteil der komplexen, hier nicht vollständig gezeigten Fluidleitung ist.

Der Außendurchmesser des hohlzylindrischen Anschlussstutzens 18 ist geringfügig kleiner als der Innendurchmesser der Durchflussbohrung 17, in die der Anschlussstutzen 18 eingesteckt ist. Der Anschlussstutzen 18 ist an seinem außenliegenden Ende mit einem radial nach außen gerichteten Ringflansch 23 versehen. Auf dem außerhalb der Durchflussbohrung 17 liegenden Umfang des Ringflansches 23 sitzt eine aufgeschobene Halteplatte 24.

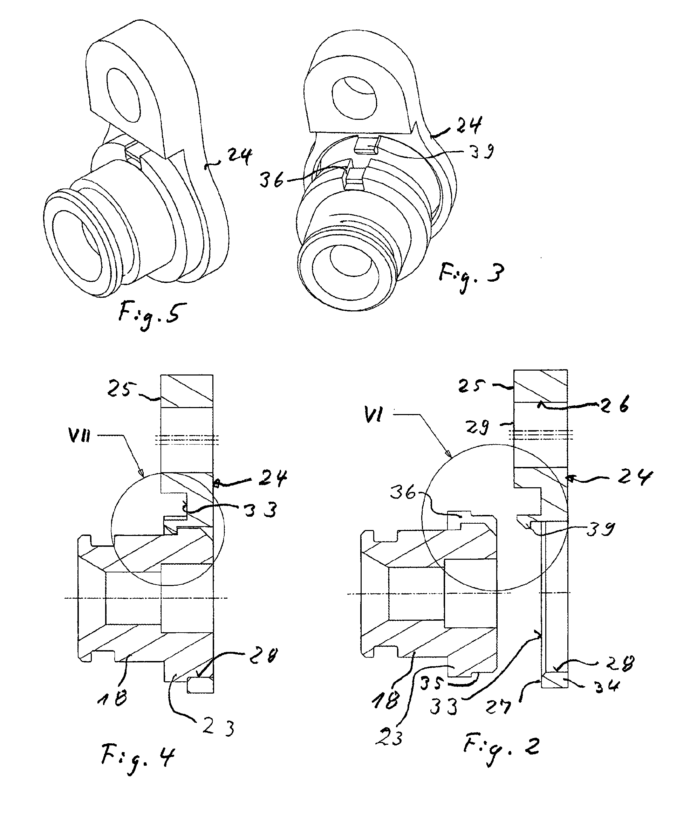

Wie auch aus der der Fig. 2 ersichtlich ist, weist die Halteplatte 24 einerseits einen Befestigungsbereich 25 mit einem Bolzenloch 26 und andererseits einen Rohraufnahmebereich 27 mit einem achsparallelen Rohrloch 28 auf, das den Anschlussstutzen 18 im montierten Zustand (Fig. 4 und 5) aufnimmt. Der Befestigungsbereich 25 der Halteplatte 24 weist eine Anschlagfläche 29 auf, die an dem Gehäuse 16 anliegt und deren Bolzenloch 26 mit einer Gewindebohrung 31 des Gehäuses 16 fluchtet. Die Anschlussvorrichtung 11 wird dort über einen eingreifenden Schraubbolzen 32 an dem Gehäuse 16 befestigt.

Die Halteplatte 24 weist im Rohraufnahmebereich 27 eine geringere Dicke auf als im Befestigungsbereich 25. Dadurch ist der Rohraufnahmebereich 27 mit einer gegenüber der Anschlagfläche 29 zurückgesetzten Fläche 33 versehen. Das diese Fläche 33 durchdringende Rohrloch 28 bildet umfangsmäßig einen Kreisring 34, der mit einer umfangsmäßigen Eindrehung 35 am stirnseitigen Ende des Anschlussstutzens 18 korrespondiert (Fig. 2).

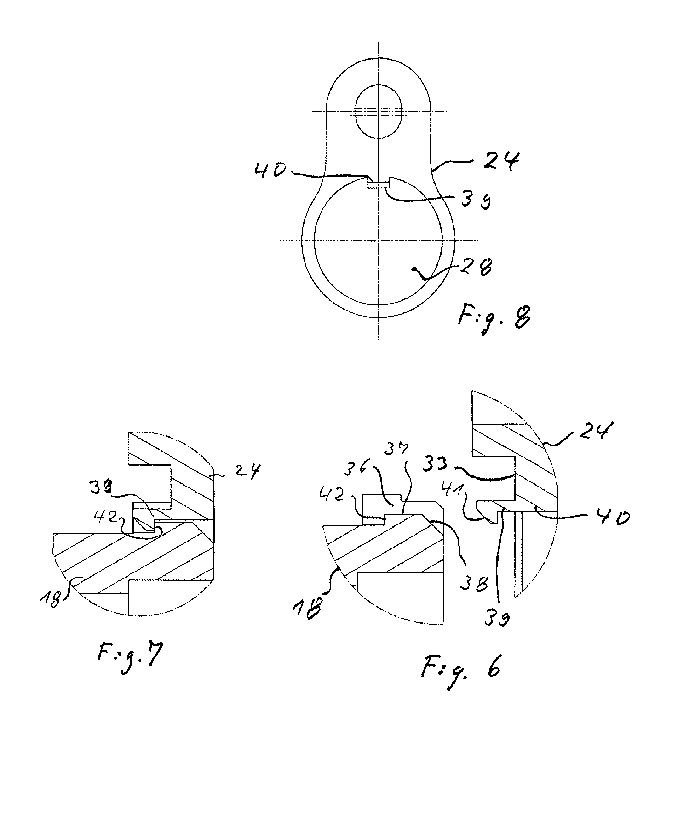

Wie aus Fig. 2 und Fig. 6 ersichtlich ist, ist der Ringflansch 23 am Scheitelpunkt mit einer Axialnut 36 versehen, deren Boden 37 zu Beginn eine schräge Anlauffläche 38 aufweist. Die Halteplatte 24 weist in ihrem korrespondierenden Scheitelpunkt des Rohrloches 28 eine in die Axialnut 36 passende Rastnase 39 auf. Die Rastnase 39 ragt im Scheitelpunkt der den Rohraufnahmebereich bildenden ersten Bohrung 28 in Verlängerung eines von einem im Scheitelpunkt der Bohrung 28 nach innen ragenden, axialen Steg 40 (Fig. 8) von der Fläche 33 vor und weist stirnseitig eine schräge Anlaufkante 41 auf. Der eine Art Paßfeder darstellende axiale Steg 40 greift in die passende axiale Scheitelnut 36 im Anschlussstutzen 18 ein.

Die Halteplatte 24 wird vor der Montage der Fluidleitung auf den Anschlussstutzen 18 geschoben, wobei die Halteplatte 24 mit ihrer Rastnase 39 in die axiale Nut 36 des Anschlussstutzens 24 gleitet (Fig. 3). Die Rastnase 39 gleitet an der schrägen Fläche 38 hoch (Fig. 2) und rastet hinter dem Nutboden 37 ein und liegt an der dort durch einen Sprung auf den Hauptdurchmesser des Anschlussstutzens 18 gebildeten senkrechten Ringfläche 42 (Fig. 7) an.

Durch das Einrasten wird ein axiales Verschieben der beiden Bauteile 18 und 24 zueinander verhindert. Die Rastnase 39 und der Kreisring 34 der Halteplatte 24 sichern den Anschlussstutzen 18 in axialer Richtung. Die Sicherung gegen eine Rotation wird durch die senkrechten Wände der Axialnut 36 erzielt, in der die Rastnase 39 und der axiale Steg 40 mit ihren Seiten anliegen.

Die Halteplatte 24 ist auf dem Anschlussstutzen 18 gegen Verdrehung und Verschiebung durch diese formschlüssige Verbindung gesichert (Fig. 5).

Durch das Anziehen des Schraubbolzens 32 wird die Anschlagfläche 29 der Halteplatte 24 gegen das Gehäuse 11 gepresst (Fig. 1) und hält dadurch auch den Anschlussstutzen 18 in seiner eingesteckten Lage. Die Halteplatte 24, die aus Kunststoff hergestellt sein kann, dient zum Fixieren der Fluidleitung, so dass der Anschlussstutzen 18 nicht aus der Durchflussbohrung 17 herausrutschen kann.

### Bezugszeichenliste

### (Teil der Beschreibung)

- 11: Anschlussvorrichtung
- 12: Rohrleitung
- 13: Bauteil; Aggregat
- 14: Rohrleitungsende
- 15: Anschlussbereich
- 16: Gehäuse
- 17: Durchflussbohrung
- 18: Anschlussstutzen
- 19: Dichtungsring
- 21: Durchgangsbohrung
- 22: Stufe
- 23: Ringflansch
- 24: Halteplatte
- 25: Befestigungsbereich
- 26: Bolzenloch
- 27: Rohraufnahmebereich
- 28: Rohrloch
- 29: Anschlagfläche
- 31: Gewindebohrung
- 32: Schraubbolzen
- 33: Fläche
- 34: Kreisring
- 35: Eindrehung
- 36: Axialnut
- 37: Nutboden
- 38: schräge Anlauffläche
- 39: Rastnase
- 40: axialer Steg
- 41: Anlaufkante
- 42: Ringfläche

## Patentansprüche

1. Anschlussvorrichtung (11) zum Verbinden eines Endes (14) einer Fluidleitung (12) mit einem eine Durchflussbohrung (17) aufweisenden, mit Fluid zu versorgenden Aggregates (13), insbesondere eines Kraftfahrzeugaggregates,
mit einer zwei seitlich zueinander versetzte Bohrungen (26, 28) aufweisenden Halteplatte (24), die das Ende (14) der in die Durchflussbohrung (17) einsteckbaren Fluidleitung (12) in einer ersten Bohrung (28) umfasst und über die zweite Bohrung (26) am Aggregat (13) befestigbar ist,
mit einem an dem Ende (14) der Fluidleitung (12) angeordneten, nach außen gerichteten Ringflansch (23), der eine ringförmige Druckfläche bildet, gegen die der Rohraufnahmebereich (27) der Halteplatte (24) anliegt, und
mit einem mit dem Ende (14) der Fluidleitung (12) verbundenen Anschlussstutzen (18), der in die Durchflussbohrung (17) einsteckbar ist,
wobei die Halteplatte (24) auf dem Anschlussstutzen (18) formschlüssig gegen Drehung und Axialverschiebung gesichert aufsteckbar ist,
**dadurch gekennzeichnet,**
**dass** die Halteplatte (24) im Scheitelpunkt der ersten Bohrung (28) eine hervorragende Rastnase (39) aufweist, die in einer axialen Scheitelnut (36) im Anschlussstutzen (18) liegt und in einen Verriegelungsabsatz (42) im Nutgrund (37) eingreift.

2. Vorrichtung (11) nach Anspruch 1, **dadurch gekennzeichnet, dass** die formschlüssige Verbindung von Anschlussstutzen (18) und Halteplatte (24) beide Teile (18, 24) relativ zueinander in gesicherter Rotations- und Axiallage hält.

3. Vorrichtung (11) nach einem der Ansprüche 1 oder 2, **dadurch gekennzeichnet, dass** die Halteplatte (24) im Scheitelpunkt der den Rohraufnahmebereich bildenden ersten Bohrung (28) einen im Scheitelpunkt der Bohrung (28) nach innen ragenden, axialen Steg, aufweist, der in eine axiale Scheitelnut (36) im Anschlussstutzen (18) eingreift.

4. Vorrichtung (11) nach Anspruch 1, **dadurch gekennzeichnet, dass** die Halteplatte (24) im Befestigungsbereich (25) eine größere Dicke aufweist als im Rohraufnahmebereich (27).

## Claims

1. Connection device (11) for connecting one end (14) of a fluid line (12) to a unit (13) having a throughflow bore (17) and to be supplied with fluid, in particular a motor vehicle unit,
having a holding plate (24) that has two bores (26, 28) that are laterally offset in relation to one another, said holding plate (24) surrounding that end (14) of the fluid line (12) that is pluggable into the throughflow bore (17) in a first bore (28), and being fastenable to the unit (13) via the second bore (26),
having an outwardly directed annular flange (23) arranged at the end (14) of the fluid line (12), said annular flange (23) forming an annular pressure surface against which the pipe receiving region (27) of the holding plate (24) rests, and
having a connection stub (18) connected to the end (14) of the fluid line (12), said connection stub (18) being pluggable into the throughflow bore (17),
wherein the holding plate (24) is pluggable onto the connection stub (18) in a form-fitting manner secured against rotation and axial displacement,
**characterized**
**in that** the holding plate (24) has a projecting latching tab (39) at the apex of the first bore (28), said latching tab (39) resting in an axial apex groove (36) in the connection stub (18) and engaging in a locking shoulder (42) in the groove bottom (37).

2. Device (11) according to Claim 1, **characterized in that** the form-fitting connection of the connection stub (18) and the holding plate (24) holds the two parts (18, 24) in a secured rotational and axial position in relation to one another.

3. Device (11) according to either of Claims 1 and 2, **characterized in that** the holding plate (24) has, at the apex of the first bore (28) forming the pipe receiving region, an axial rib projecting inwardly at the apex of the bore (28), said rib engaging in an axial apex groove (36) in the connection stub (18).

4. Device (11) according to Claim 1, **characterized in that** the holding plate (24) has a greater thickness in the fastening region (25) than in the pipe receiving region (27).

## Revendications

1. Dispositif de connexion (11) pour relier une extrémité (14) d'une conduite fluidique (12) à un groupe (13) présentant un alésage de passage (17) et devant être alimenté en fluide, notamment d'un groupe d'un véhicule automobile,
comprenant une plaque de retenue (24) présentant deux alésages (26, 28) décalés latéralement l'un par rapport à l'autre, qui entoure l'extrémité (14) de la conduite fluidique (12) pouvant être enfoncée dans l'alésage de passage (17) dans un premier alésage (28), et qui peut être fixée au groupe (13) par le biais du deuxième alésage (26), comprenant une bride annulaire (23) orientée vers l'extérieur, disposée sur l'extrémité (14) de la conduite fluidique (12), qui forme une surface de pression annulaire contre laquelle s'applique la région de réception de tuyau (27) de la plaque de retenue (24), et
comprenant une tubulure de raccordement (18) connectée à l'extrémité (14) de la conduite fluidique (12), qui peut être enfoncée dans l'alésage de passage (17),
la plaque de retenue (24) pouvant être enfilée sur la tubulure de raccordement (18) de manière fixée par engagement par correspondance géométrique en rotation et en déplacement axial,
**caractérisé en ce que**
la plaque de retenue (24) présente, au sommet du premier alésage (28), un nez d'encliquetage saillant (39) qui se situe dans une rainure de sommet axiale (36) dans la tubulure de raccordement (18) et qui vient en prise dans un épaulement de verrouillage (42) dans le fond de rainure (37).

2. Dispositif (11) selon la revendication 1, **caractérisé en ce que** la connexion par engagement par correspondance géométrique de la tubulure de raccordement (18) et de la plaque de retenue (24) retient les deux pièces (18, 24) l'une par rapport à l'autre en position fixée en rotation et axialement.

3. Dispositif (11) selon l'une quelconque des revendications 1 ou 2, **caractérisé en ce que** la plaque de retenue (24) présente, au sommet du premier alésage (28) formant la région de réception de tuyau, une nervure axiale saillant vers l'intérieur dans le sommet de l'alésage (28), laquelle vient en prise dans une rainure de sommet axiale (36) dans la tubulure de raccordement (18).

4. Dispositif (11) selon la revendication 1, **caractérisé en ce que** la plaque de retenue (24) présente dans la région de fixation (25) une plus grande épaisseur que dans la région de réception de tuyau (27).
